# EUROPEAN PATENT APPLICATION

(11) **EP 1 284 458 A2**
(43) Date of publication of application: **19.02.2003**
(21) Application number: 02017739.0
(22) Date of filing: 08.08.2002
(51) Int. Cl.: G06F 12/08, H04B 7/14, H04B 7/185

(54) **Processing satellite web proxy cache**

(30) Priority: 08.08.2001 US 925057
(71) Applicant: TRW INC., Redondo Beach, CA 90278 (US)
(72) Inventor: Stroll, Zoltan Z., Rancho Palos Verdes, CA 90275 (US)
(74) Representative: Schmidt, Steffen J., Dipl.-Ing.

(57) **Abstract**

A processing satellite proxy cache subsystem for a satellite payload (106) includes an uplink demodulator and decoder (108) for recovering a resource information request from a satellite uplink, a proxy cache (118) comprising a cache memory (210), a processor (204), and a switch (116) coupled to the uplink demodulator and decoder (108) and to the web proxy cache (118). The switch (116) couples to the web proxy cache (118) through a switch output port connection (120) that directs the resource information request to the web proxy cache (118). The processor (204) is responsive to the resource information request for retrieving resource information content associated with the information request from the cache memory (210) for downlinking to the requesting user terminal (102).

## Description

### BACKGROUND OF THE INVENTION

The present invention relates to satellite communication systems. In particular, the present invention relates to a satellite communication system including a web proxy cache onboard a satellite.

Satellites have long provided communication bandwidth on a global scale. Voice, video, and data traffic routinely circle the globe, aided by satellite relays that interface with terrestrial networks. In any network, there is a delay, or latency, while data travels from an origin to a destination.

Geosynchronous satellite relays, in particular, add at least 480 milliseconds of round trip delay between a user and or gateway. To a certain extent, the additional latency is unavoidable, given that a signal requires 120 milliseconds to reach a satellite receiver in an uplink, and an additional 120 milliseconds to reach a user terminal in a downlink. Latency, of course, increases the amount of time required to transfer any data through the satellite.

With web browsing in particular, latency is extremely noticeable. Thus, web sites accessed from around the globe through a satellite relay may appear sluggish and unresponsive. This may be true (due to the satellite relay latency) regardless of the speed at which the web site server actually responds to information requests.

A need has long existed in the industry for a satellite web proxy cache that addresses the problems noted above and others previously experienced.

### BRIEF SUMMARY OF THE INVENTION

A preferred embodiment of the present invention provides a method for operating a proxy cache in a satellite communication system. The method includes recovering a resource information request (e.g., embodied in a Uniform Resource Locator) from a satellite uplink, directing the resource information request to a proxy cache onboard the satellite (e.g., through a switch), and, when the proxy cache stores resource information content associated with the information request, downlinking the resource information content to the requesting user terminal.
In addition, the method may downlink the resource information request when the proxy cache does not store resource information content associated with the resource information request. Then, after receiving responsive resource information content, the method downlinks the responsive resource information content to the requesting user terminal. The responsive resource information may also be stored in the proxy cache depending on the application of a cache replacement algorithm.

Another preferred embodiment of the present invention provides a processing satellite proxy cache subsystem. The proxy cache subsystem includes an uplink demodulator for recovering a resource information request from a satellite uplink, a proxy cache comprising a cache memory and a processor, and a switch coupled to the uplink demodulator and to the web proxy cache. The switch couples to the web proxy cache through a switch output port connection that directs the resource information request to the web proxy cache. The processor is responsive to the resource information request for retrieving resource information content associated with the information request from the cache memory for downlinking.

As an example, the cache memory may be a solid state recorder supported by a Uniform Resource Locator content addressable memory. As noted above with regard to the method of operation, the processor may also be further responsive to forward the resource information request through the switch to a satellite downlink when the cache memory does not store resource information content associated with the information request. The processor may also store responsive resource information in the proxy cache for subsequent retrievals according to a cache replacement algorithm.

### BRIEF DESCRIPTION OF THE DRAWINGS

Figure 1 illustrates a block diagram of a satellite processing path including a web proxy cache.

Figure 2 shows a block diagram of a satellite web proxy cache.

Figure 3 shows a flow diagram of the operation of a processing satellite that includes a web proxy cache.

### DETAILED DESCRIPTION OF THE INVENTION

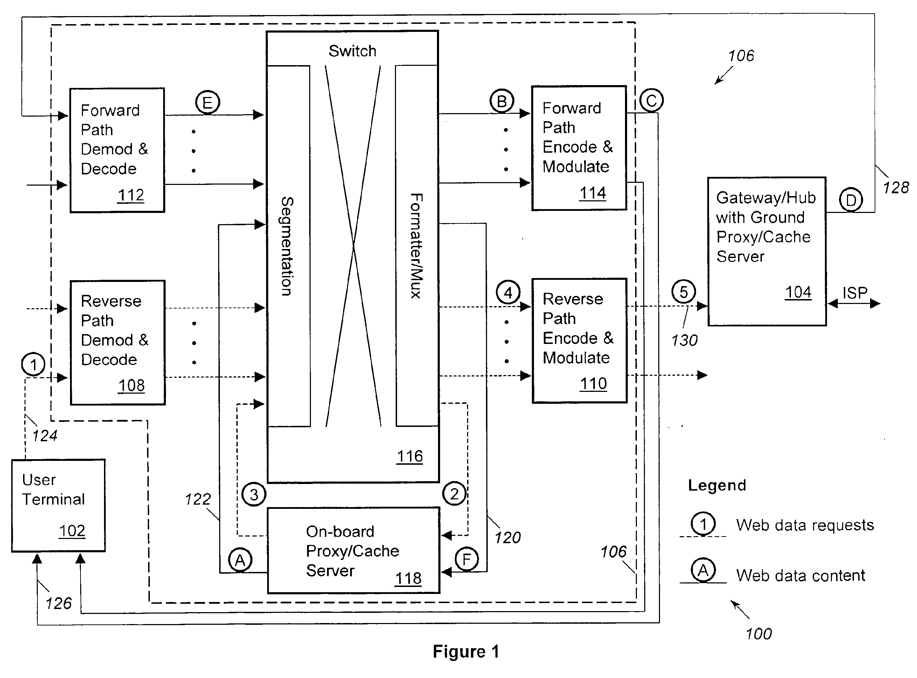

Turning now to Figure 1, that figure presents an embodiment of a satellite processing path 100, including a user terminal 102, a gateway 104, and a satellite payload 106. The satellite payload 106 includes a reverse path demodulator / decoder 108, a reverse path coder / modulator 110, a forward path demodulator / decoder 112, and a forward path coder / modulator 114. In addition, the satellite payload 106 includes a switch 116 that couples the demodulator and decoders 108, 112 to the modulators and coders 110, 114. The payload 106 further includes a proxy cache 118 coupled to the switch 116 through, for example, the output port connection 120 and the input port connection 122. The user terminal 102 communicates with the satellite, for example, over the uplink 124 and the downlink 126.

The switch 116 may be, as examples, an IP switch or an ATM switch that routes data on any of its input ports to one or more output ports. To that end, addressing information in self-addressed packets received in the uplink may be used to direct uplink data through the switch. For example, an IP or VPI/VCI may be used by the switch to direct uplink data from an input port to an output port.

The demodulators and decoders 108, 112 operate to decode one or more uplinks (e.g., the uplink 124). The demodulators may be, for example, QPSK or BPSK demodulators. The decoders may include both block decoders (e.g., applying Reed Solomon or BCH codes) and convolutional code (e.g., rate 3/8 or 3/4) decoders, and thus may be configured to decode a concatenated code applied to uplink data. The modulators and coders 110, 114 operate to encode and modulate data for transmission in a downlink. The coders may include both block and convolutional coders (e.g., to provide a concatenated code). The modulators may include both QPSK and BPSK modulators, as examples.

The gateway 104 represents a connection to an information network external to the satellite. Thus, the gateway 104 may be a terrestrial gateway with a physical connection to the Internet, for example. The gateway communicates with the satellite over the uplink 128 and downlink 130, for example. The gateway 104 may include its own proxy cache, for example, although the gateway 104 may also simply forward resource information requests to the appropriate destinations.

Referring still to Figure 1, numerical flow arrow labels represent the flow of resource information requests, while alphabetic flow arrow labels represent the flow of responsive resource information content. In tracing a request through the satellite payload 106, it is first assumed that the user terminal 102 uplinks a resource information request to the satellite. The resource information request may be, as examples, a Uniform Resource Locator (URL) string, IP address, VPI/VCI, and the like. Thus, the information resource request may be a request to retrieve a web page at a specified http:// address or to retrieve the contents of an ftp directory at a specified ftp:// address. The information resource request may also be very specific, e.g., pointing to a specific file such as http://www.yahoo.com/news/AssociatedPressPhoto.jpg.

Thus, as shown by the Label 1, the demodulator and decoder 108 receives uplink data including information resource requests in the uplink 124 from the user terminal 102. The demodulator and decoder 108 remove the modulation and coding applied the uplink data to recover the resource information requests (e.g., as identified by URL strings, IP addresses, VPI/VCI addresses, and the like). In other words, the satellite payload 106 is a processing satellite payload, as opposed to a simple bent pipe transponder.

Subsequently, as shown by the Label 2, the switch 116 directs the information resource requests from an input port to an output port (e.g., the output port 120) coupled to the proxy cache. As will be explained in more detail below the proxy cache determines whether resource information content associated with the resource information request is present in the proxy cache 118.

If resource information content is present, the proxy cache 118 forwards the resource information content through the switch 116 as shown by the Label A. The switch directs the resource information content to an output port coupled to a modulator and coder 114 that provides downlink coverage for the user terminal 102, as illustrated by the Label B. The coded and modulated resource information content is transmitted in the downlink 126 to the user terminal 102, as shown by the Label C.

On the other hand, if resource information content is not present, the proxy cache 118 forwards the resource information request through the switch 116 as shown by the Label 3. The switch directs the resource information request to an output port coupled to a modulator and coder 110 that provides downlink coverage for the gateway 104, as illustrated by the Label 4. The coded and modulated resource information request is transmitted in a downlink to the gateway 104, as shown by the Label 5.

The gateway retrieves the associated information resource content directly from its network connection, and uplinks the information resource content to the satellite, as illustrated by the Label D. The information resource content is demodulated and decoded at the demodulator and decoder 112, and passed through the switch 116, as shown by the label E. The switch directs the resource information content to the proxy cache 118 and/or the encoder and modulator 114 (e.g., a multicast output). Resource information content received at the proxy cache 118 is analyzed by a cache replacement algorithm that determines whether to store the resource information content in the proxy cache 118. The resource information content that passes to the coder and modulator 114 (either through multicast, or from the proxy cache 118) is transmitted in the downlink 126 to the user terminal 102.

Thus, when resource information content is present in the proxy cache 118, the proxy cache 118 provides the resource information content to the user terminal 102 without the delays associated with access through the gateway 104. Furthermore, the proxy cache 118 updates its cache in response to new resource content information receive from the gateway 104, and may also update resource content information that is deemed to be stale. To that end, the proxy cache 118 may execute a commercially available cache replacement algorithm.

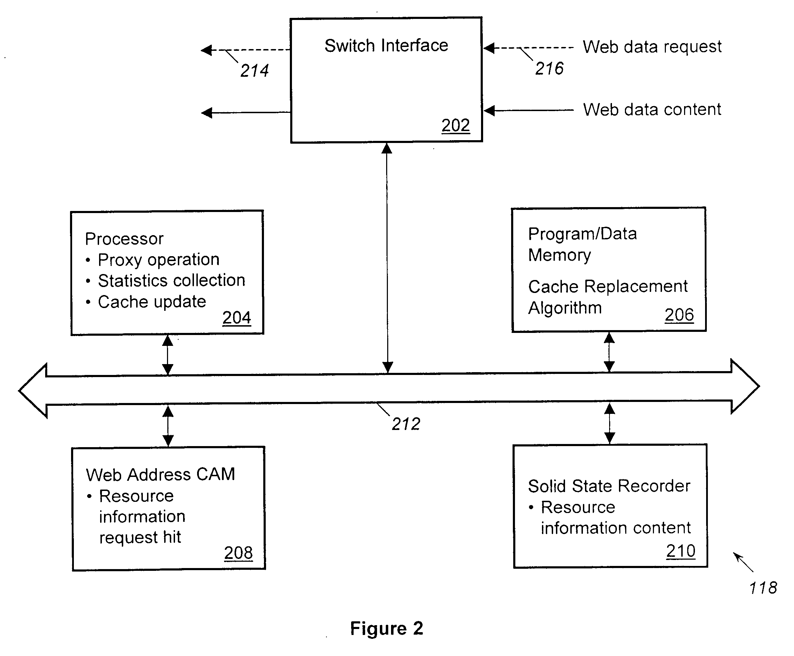

Figure 2 illustrates a more detailed block diagram of the proxy cache 118. The proxy cache 118 includes a switch interface 202, a processor 204, and a program/data memory 206 (e.g., a combination of RAM and ROM). Also included are a content addressable memory 208 and a cache memory 210 (e.g., a solid state recorder) coupled to the processor 204 and program memory 206 over the bus 212 (e.g., a combined address, control, and data bus).

The switch interface 202 includes electronics to couple to the switch 116, for example, through the switch output port connection 214, and the switch input port connection 216. In other words, the switch interface 202 receives data (including resource information requests and information resource content) from the switch 116 over the switch output port connection 214.

The processor 204 applies the information resource request to the content addressable memory 208 in order find a pointer into the cache memory 210 where the associated information resource content resides. Alternatively, the processor 204 may store the pointers in the program memory 206, and search the memory 206 for pointers based on the information resource request. To this end, the processor 204 may use hashing techniques to map information resource requests to a smaller set of possibilities for searching.

When associated resource information content is not present in the cache memory 210, the processor 204 passes the resource information request back through the switch interface 202 to the switch 116. As explained above, the switch 116 then directs the information resource request to the downlink associated with the gateway 104. Responsive resource information content may then be stored in the cache memory 210 according to a cache replacement algorithm.

On the other hand, when associated resource information content is present in the cache memory 210, the processor 204 retrieves the associated resource information content, and forwards it through the switch interface 202 to the switch 116. The switch 116 directs the resource information content to a downlink covering the user terminal 102. The resource information request is not directed to the gateway 104, unless the cache replacement algorithm decides to refresh the resource information content.

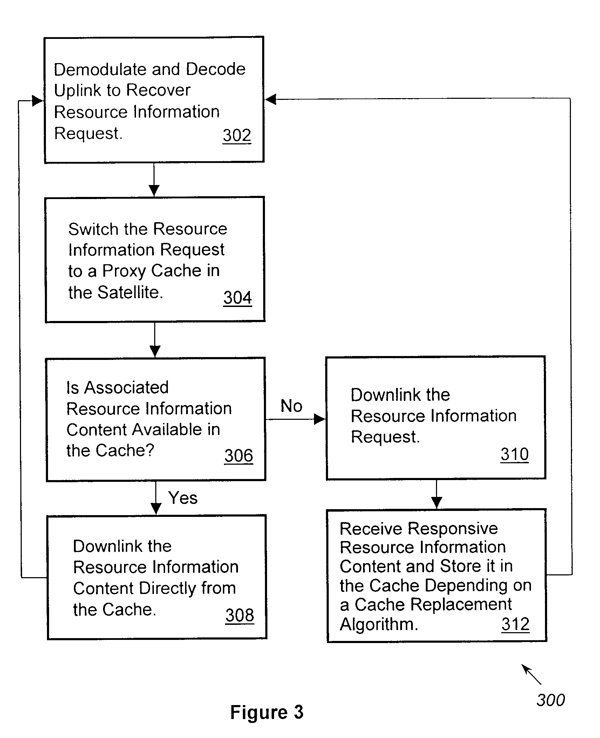

Turning next to Figure 3, a flow diagram 300 summarizes the processing steps described above. First, the satellite payload 116 demodulates and decodes 302 an uplink to recover, among other data, resource information requests. The switch 116 switches 304 the information resource requests to the proxy cache 118.

The proxy cache 118 determines 306 whether resource information content associated with the resource information request is present in the proxy cache 118. If so, the proxy cache 118 forwards the resource information content through the switch 116 so that the payload 106 may downlink 308 the resource information content to the requesting user terminal 102.

When associated resource information content is not present in the proxy cache 118, the resource information request is redirected through the switch 116 so that the payload 106 may downlink 310 the resource information request to the gateway 104. Responsive resource information content is received 312 and potentially stored in the proxy cache 118 depending on the cache replacement algorithm.

Thus, the present satellite proxy cache provides a mechanism for improving response time to resource information requests from user terminals. Rather than incurring two round trip propagation delays through the satellite, the present invention, when cache hits occur, eliminates one round trip propagation delay. Given the inescapable propagation times for signals up to a satellite, and down to the ground, the present proxy cache may thereby provide noticeable improvement in application responsiveness at the user terminal.

While the invention has been described with reference to a preferred embodiment, those skilled in the art will understand that various changes may be made and equivalents may be substituted without departing from the scope of the invention. In addition, many modifications may be made to adapt a particular step, structure, or material to the teachings of the invention without departing from its scope. Therefore, it is intended that the invention not be limited to the particular embodiment disclosed, but that the invention will include all embodiments falling within the scope of the appended claims.

## Claims

1. A proxy cache for a satellite communication system, the proxy cache comprising:
a resource information content memory;
a processor coupled to the resource information content memory;
a switch output port connection for receiving a resource information request recovered from a satellite uplink; and
a switch input port connection for routing resource information content retrieved by the processor from the resource information content memory to a satellite downlink in response to the resource information request.

2. The proxy cache of claim 1, wherein the resource information content memory is a solid state recorder.

3. The proxy cache of claim 1, wherein the resource information request is a Uniform Resource Locator.

4. A proxy cache for a satellite communication system, the proxy cache comprising:
a resource information content memory;
a processor coupled to the resource information content memory;
a content addressable memory storing pointers into the resource information content memory;
a switch output port connection for receiving a resource information request recovered from a satellite uplink; and
a switch input port connection for routing resource information content retrieved by the processor from the resource information content memory to a satellite downlink in response to the resource information request.

5. The proxy cache of claim 4, wherein the content addressable memory is a Uniform Resource Locator content addressable memory.

6. The proxy cache of claim 4, wherein the content addressable memory is an IP address content addressable memory.

7. The proxy cache of claim 4, wherein the content addressable memory is a ATM content addressable memory.

8. The proxy cache of claim 7, wherein the ATM content addressable memory is addressed according to at least one of VPI and VCI.
